# EUROPEAN PATENT APPLICATION

(11) **EP 4 730 235 A1**
(43) Date of publication of application: **22.04.2026**
(21) Application number: 25201485.7
(22) Date of filing: 10.09.2025
(51) Int. Cl.: G06Q 10/0633, G06Q 10/10, H04L 67/10, H04L 67/1097, H04N 1/00

(54) **INFORMATION PROCESSING SYSTEM, INFORMATION PROCESSING DEVICE, AND INFORMATION PROCESSING METHOD**

(30) Priority: 21.10.2024 JP 2024185252
(71) Applicant: Toshiba TEC Kabushiki Kaisha, Tokyo 141-8562 (JP)
(72) Inventor: Takimura, Ryo, Tokyo, 141-8562 (JP); Sakuma, Sho, Tokyo, 141-8562 (JP); Maeda, Tomoki, Tokyo, 141-8562 (JP); Umekawa, Kohei, Tokyo, 141-8562 (JP); Okada, Shuta, Tokyo, 141-8562 (JP)
(74) Representative: Bandpay & Greuter

(57) **Abstract**

According to one embodiment, an information processing system includes a network, a workflow creation server accessible to a plurality of user terminals via the network, and a user setting server storing user settings for users of the user terminals. The workflow creation server creates a workflow plan in response to an operation of a workflow creator at a creator terminal. The workflow plan includes a step or process involving accessing a cloud service using a first cloud service account. The user setting terminal registers a second cloud service account for accessing the cloud service in response to an instruction from a user at a user terminal. The second cloud service account is associated with the user. When the workflow plan is executed by the user via the network, the second cloud service account is used for accessing the cloud service instead of the first cloud service account.

## Description

### FIELD

Embodiments described herein relate generally to an information processing system, an information processing device, and an information processing method associated with workflow plans related to usage and provision of cloud-based services.

### BACKGROUND

A service providing system that defines a workflow (a workflow plan) in which a series of tasks is standardized for one overall type of work to be performed. For example, a series of tasks such as scanning a paper document with an image forming device to create an electronic document, and then uploading the electronic document to a cloud service that has been designated by a user of the cloud service, may be set in a defined workflow plan. In this service providing system, when a logged-in user scans a paper document using the image forming device, the user designates a particular workflow to start and then scans the paper document, and thus it is possible to perform additional tasks defined in the workflow plan.

Incidentally, in a workflow that includes uploads of files or data to a cloud service, the cloud service may be linked to an account within the workflow, but this is typically an account that was used when creating the workflow plan rather than an end user's account or the like.

However, at least some of various cloud services currently in use prohibit by rule the reuse of accounts (having multiple users use a single account).

### DISCLOSURE OF THE INVENTION

To this end, an information processing system, an information processing device, and an information processing method according to appended claims are provided.

### BRIEF DESCRIPTION OF THE DRAWINGS

FIG. 1 is a block diagram of a service providing system according to a first embodiment.
FIG. 2 is a block diagram of a workflow creation server in a service providing system.
FIG. 3 is a schematic diagram showing an example of contents stored in a management table storage unit of a workflow creation server.
FIG. 4 is a block diagram of a creator terminal and a user terminal in a service providing system.
FIG. 5 is a block diagram of a user setting server according to a first embodiment.
FIG. 6 is a schematic diagram showing an example of contents stored in a user setting storage unit of a user setting server.
FIG. 7 is a sequence diagram showing operations when creating a workflow in a service providing system.
FIG. 8 is a flowchart of a workflow creation processing operation executed by a processor of a workflow creation server.
FIG. 9 is a diagram showing an example of a registered service list screen displayed on a creator terminal when creating a workflow.
FIG. 10 is a sequence diagram showing operations when registering an account of a user who uses a cloud service in a service providing system.
FIG. 11 is a flowchart of an account registration processing operation executed by a processor of a user setting server.
FIG. 12 is a diagram showing an example of a cloud service list screen displayed on a user terminal when registering an account.
FIG. 13 is a sequence diagram showing operations when a workflow is executed in a service providing system.
FIG. 14 is a flowchart when a workflow is executed by a processor of a user setting server.
FIG. 15 is a diagram showing an example of an account invalid warning window that is displayed on a user terminal when a valid user account is not registered prior to execution of a workflow.
FIG. 16 is a diagram showing an example of an access denial warning window that is displayed on a user terminal when a storage destination folder of a cloud service cannot be accessed prior to execution of a workflow.
FIG. 17 is a sequence diagram showing operations when creating a workflow in a service providing system according to a second embodiment.
FIG. 18 is a flowchart of a workflow creation processing operation executed by a processor of a workflow creation server.
FIG. 19 is a sequence diagram showing operations when executing a workflow in a service providing system according to a third embodiment.
FIG. 20 is a flowchart of a processing operation when a workflow is executed by a processor of a user setting server according to a third embodiment.
FIG. 21 is a block diagram of a service providing system according to a fourth embodiment.
FIG. 22 is a block diagram of an integrated server according to a fourth embodiment.

### DETAILED DESCRIPTION

Embodiments described herein provide an information processing system, an information processing device, and an information processing method that enable each user to use a separate account when accessing a cloud service within a workflow without requiring multiple users to use the same account such as the one set during the creation of the workflow plan.

In general, according to one embodiment, an information processing system includes a network, a workflow creation server accessible to a plurality of user terminals via the network, and a user setting server storing user settings for users of the user terminals. The workflow creation server is configured to create a workflow plan in response to an operation of a workflow creator at a creator terminal. The workflow plan includes accessing a cloud service using a first cloud service account. The user setting terminal registers a second cloud service account for accessing the cloud service in response to an instruction from a user at a user terminal. The second cloud service account is specifically associated with the user. When the workflow plan is executed by the user via the network, the second cloud service account is used for accessing the cloud service instead of the first cloud service account.

### First embodiment

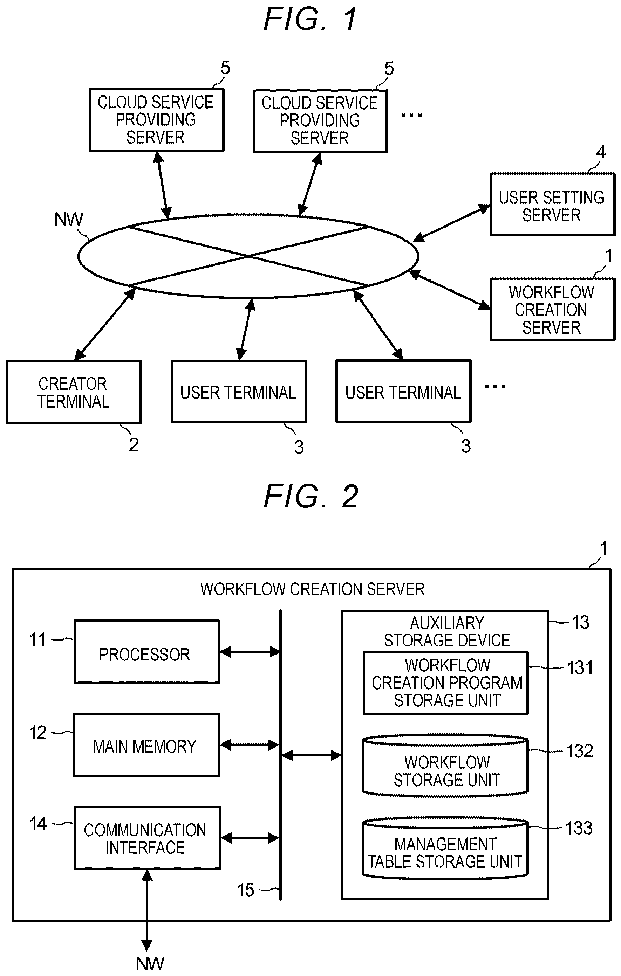

FIG. 1 is a block diagram showing an example of the overall configuration of a service providing system, serving as an information processing system, according to a first embodiment. In this first embodiment, the service providing system includes a workflow creation server 1, at least one creator terminal 2, a plurality of user terminals 3, a user setting server 4, and a plurality of cloud service providing servers 5, all of which are connected to each other via a network NW, such as the Internet. The workflow creation server 1 has a function of creating a workflow within the service providing system. The creator terminal 2 is operated by a specific creator, such as a dealer, serviceman, or administrator, and functions as a client of the workflow creation server 1 to create a workflow (a workflow plan or workflow process). Each of the user terminals 3 is operated by a user and functions as a client of the user setting server 4. The user setting server 4 registers information regarding the user in response to instructions from the user terminals 3 and executes the workflow created by the workflow creation server 1. The cloud service providing servers 5 each provide a service for storing a file of a user in a cloud storage. In this first embodiment, the cloud service providing server 5 prepares in advance, in its cloud storage, a shared folder for file sharing between a creator and users in association with the accounts of the creator and the user(s) corresponding to the creator.

The workflow creation server 1 may be an information processing apparatus such as a server computer. FIG. 2 is a block diagram showing an example of the configuration of the workflow creation server 1. As shown in FIG. 2, the workflow creation server 1 includes a processor 11, a main memory 12, an auxiliary storage device 13, a communication interface 14, and the like. These components are connected to each other via a bus line 15 such as a data bus.

The processor 11 can be a central processing unit (CPU), but is not limited thereto. The processor 11 may be a multi-core/multi-threaded processor that can execute a plurality of processes in parallel. The processor 11 may also be a micro processing unit (MPU). The processor 11 has a function of controlling the overall operation of the workflow creation server 1. The processor 11 may include an internal memory and various interfaces. The processor 11 implements various processes by executing programs stored in the internal memory or the auxiliary storage device 13.

Some of the various functions that are implemented by executing a program on the processor 11 may be implemented by various types of hardware circuits, including integrated circuits such as an application specific integrated circuit (ASIC), a digital signal processor (DSP), a field-programmable gate array (FPGA), a graphics processing unit (GPU), a system on a chip (SoC), and a programmable logic device (PLD). In this case, the processor 11 controls the functions executed by these hardware circuits.

The main memory 12 is a volatile memory. The main memory 12 is a working memory or a buffer memory. The main memory 12 can store various application programs on the basis of commands received from the processor 11. The main memory 12 can also include a temporary storage unit that stores data necessary for the execution of control programs and application programs stored in the auxiliary storage device 13, and execution results of the programs.

The auxiliary storage device 13 is a non-volatile internal storage to which data can be written and rewritten. Inexpensive storage devices with low fault tolerance, such as a hard disk drive (HDD), a solid-state drive (SSD), or a flash memory, are adopted for the auxiliary storage device 13. The auxiliary storage device 13 stores control programs, application programs, various data, and the like in accordance with the operations of the workflow creation server 1. For example, the auxiliary storage device 13 includes a workflow creation program storage unit 131, a workflow storage unit 132, and a management table storage unit 133.

The workflow creation program storage unit 131 stores a workflow creation program that permits the processor 11 to create a workflow in response to an instruction received from the creator terminal 2. The workflow creation program can be, for example, one that presents a creation screen for creating a workflow and allows the workflow to be created interactively through operations from the creator terminal 2. For example, a file may be uploaded to a designated folder in a cloud storage provided by a cloud service providing server 5 as needed. When creating this workflow, the folder in the cloud storage can be designated using account information for accessing the cloud service designated by the creator terminal 2 and associated with a company account.

The workflow storage unit 132 is a storage unit that stores a workflow that has been created in response to an instruction received from a creator by operating the creator terminal 2.

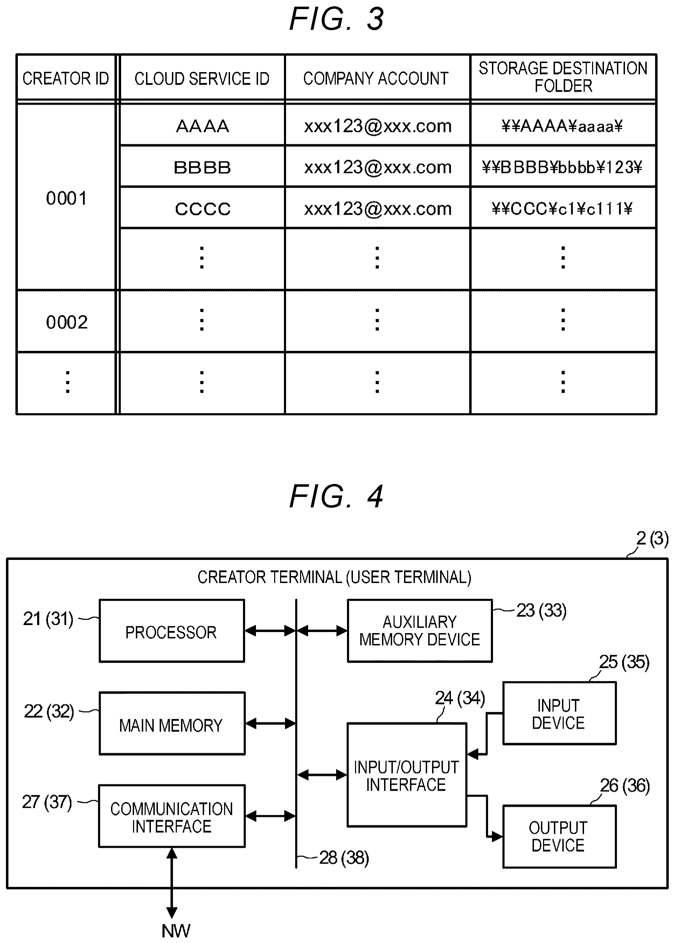

The management table storage unit 133 stores an account of the creator designated from the creator terminal 2. FIG. 3 is a schematic diagram showing an example of contents stored in the management table storage unit 133. As shown in FIG. 3, the management table storage unit 133 stores, for each unique creator ID (identifying a creator), a company account name or designator (e.g., an account of a company that has contracted with the cloud service of a cloud service providing server 5), and a storage destination folder designation for specifying a shared folder in a cloud storage which is an uploading destination for each unique cloud service ID (for identifying a cloud service of a cloud service providing server 5).

The communication interface 14 is for communicating with the creator terminal 2 and the cloud service providing server(s) 5. The creator terminal 2 and the cloud service providing server(s) 5 are external devices on the network NW.

In addition to the configuration shown in FIG. 2, the workflow creation server 1 may incorporate additional aspects as needed. For example, the workflow creation server 1 may include a reader device for reading information from a recording medium that stores various information such as programs and data. The programs stored in the recording medium may include a workflow creation program.

The creator terminal 2 may be an information processing apparatus such as a personal computer. FIG. 4 is a block diagram showing an example of the configuration of the creator terminal 2. As shown in FIG. 4, the creator terminal 2 includes a processor 21, a main memory 22, an auxiliary storage device 23, an input/output interface 24, an input device 25, an output device 26, a communication interface 27, and the like. The processor 21, the main memory 22, the auxiliary storage device 23, the input/output interface 24, the input device 25, the output device 26, and the communication interface 27 are connected to each other via a bus line 28 such as a data bus. The input device 25 and the output device 26 are connected to the input/output interface 24. The creator terminal 2 may incorporate additional aspects beyond those shown in FIG. 4, or depicted aspects may be omitted in some cases.

The processor 21 can be a CPU, but is not limited thereto. The processor 21 may be a multi-core/multi-thread processor, and can execute a plurality of processes in parallel. The processor 21 may also be an MPU. The processor 21 has a function of controlling the overall operation of the creator terminal 2. The processor 21 may include an internal memory, various interfaces, and the like. The processor 21 implements various processes by executing programs stored in advance in the internal memory, the auxiliary storage device 23, or the like. Some of the various functions implemented by executing the programs by the processor 21 may be implemented by various types of hardware circuits including integrated circuits such as ASIC, DSP, FPGA, GPU, SoC, and PLD. In this case, the processor 21 controls the functions executed by the hardware circuits.

The main memory 22 is a volatile memory. The main memory 22 is a working memory. The main memory 22 can store various application programs on the basis of instructions received from the processor 21. The main memory 22 can also store data necessary for the execution of control programs and application programs stored in the auxiliary storage device 23, and execution results of the programs.

The auxiliary storage device 23 is a non-volatile internal storage device to which data can be written and rewritten. The auxiliary storage device 23 stores control programs, application programs, various data, and the like in accordance with the operational purpose of the creator terminal 2. For example, the auxiliary storage device 23 can function as a client of the workflow creation server 1 as one of the application programs to store a program for causing the server 1 to create a workflow. For example, when the workflow creation program of the workflow creation server 1 is a program that provides a predetermined creation screen for creating a workflow as a Web page, the program stored in the auxiliary storage device 23 may be a program that provides a Web browser.

The input/output interface 24 is an interface for the input device 25 and the output device 26. The input device 25 is used by the creator to input instructions and information required for the operation of the creator terminal 2. The input device 25 can be or include, for example, a keyboard, a pointing device such as a mouse or a touch pad, and the like. The input device 25 may also be or include a touch panel, operation buttons, and the like arranged on a display screen of the output device 26. The input device 25 may also include a reader device for reading information from a recording medium that stores various information such as programs and data. The output device 26 may include a display, such as an LCD monitor, an organic EL (ElectroLuminescence) monitor, a projector screen, or a head-mounted display, for displaying various information generated by the creator terminal 2. The output device 26 may also include a speaker for transmitting various information to the creator by sound. Furthermore, the output device 26 may include a writer device for writing information generated by the creator terminal 2 to a recording medium.

The communication interface 27 is for communicating with the workflow creation server 1, which is an external device on the network NW.

Similarly to the creator terminal 2, the user terminal 3 may be an information processing apparatus such as a personal computer. That is, the user terminal 3 can have the same configuration as the creator terminal 2. The component reference symbols for the user terminal 3 are shown in parentheses in FIG. 4. The operator of user terminal 3 is a user instead of a creator. The user terminal 3 includes a processor 31, a main memory 32, an auxiliary storage device 33, an input/output interface 34, an input device 35, an output device 36, a communication interface 37, and the like. In the user terminal 3, the auxiliary storage device 33 can store a program that functions as a client of the user setting server 4 as one of the application programs and causes the user setting server 4 to register user accounts for different cloud services and execute workflows. This program may use a web browser as a user interface in some examples.

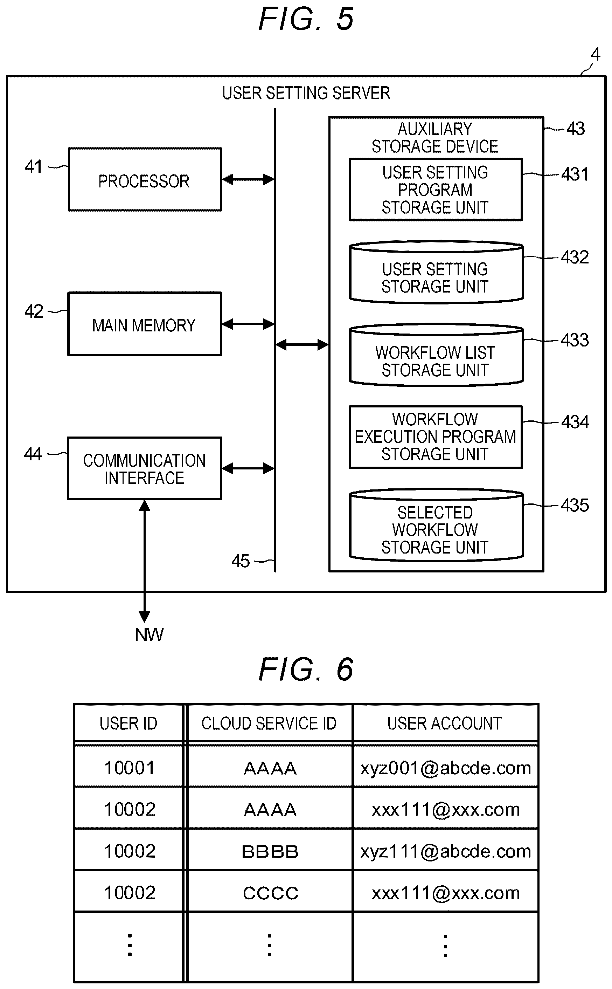

The user setting server 4 is an information processing device according to the first embodiment. The user setting server 4 may be an information processing apparatus such as a server computer, similar to the workflow creation server 1. FIG. 5 is a block diagram showing an example of the configuration of the user setting server 4. As shown in FIG. 5, similar to the workflow creation server 1, the user setting server 4 includes a processor 41, a main memory 42, an auxiliary storage device 43, a communication interface 44, and the like. These components are connected to each other via a bus line 45 such as a data bus. The auxiliary storage device 43 includes a user setting program storage unit 431, a user setting storage unit 432, a workflow list storage unit 433, a workflow execution program storage unit 434, and a selected workflow storage unit 435.

The user setting program storage unit 431 stores a user setting program that causes the processor 41 to set user information on the basis of instructions received from the user terminal 3. The user information includes a cloud service of the cloud service providing server 5 used (or to be used) by the user and a user account that is the user's account for accessing or using the cloud service.

The user setting storage unit 432 stores information regarding the set user. FIG. 6 is a schematic diagram showing an example of contents stored in the user setting storage unit 432. As shown in FIG. 6, the user setting storage unit 432 stores a set cloud service ID and user account in association with a unique user ID identifying a particular user. The cloud service ID is identification information for uniquely identifying a cloud service of the cloud service providing server 5 used by the user.

The workflow list storage unit 433 stores workflow list information that indicates a list of workflows stored in the workflow storage unit 132 of the workflow creation server 1. The list is transmitted by the workflow creation server 1 each time a workflow is created.

The workflow execution program storage unit 434 stores a workflow execution program that causes the processor 41 to accept the selection of a workflow to be executed from the user terminal 3 and to acquire the selected workflow from the workflow creation server 1 and execute it.

The selected workflow storage unit 435 stores the selected workflow acquired from the workflow creation server 1.

The communication interface 44 is for communicating with the workflow creation server 1, the user terminal 3, and the cloud service providing server 5, which are external devices on the network NW. The communication interface 44 is an example of a reception unit that receives instructions from the user via the network NW.

In addition to the configuration shown in FIG. 5, the user setting server 4 may incorporate additional aspects. For example, the user setting server 4 may include a reader device for reading information from a recording medium that stores various information such as programs and data. The programs stored in the recording medium may include at least one of a user setting program and a workflow execution program.

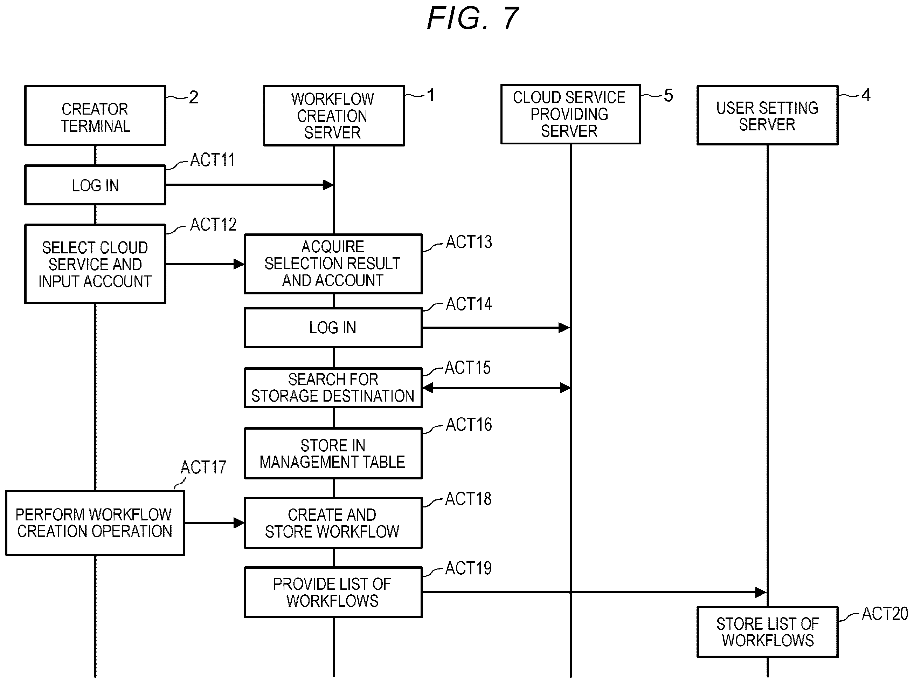

Hereinafter, certain operations when creating a workflow in a service providing system will be described. FIG. 7 is a sequence diagram showing operations when creating a workflow in a service providing system.

When a creator of a workflow at the creator terminal 2 instructs the workflow creation server 1 to execute a workflow creation program, a creation screen provided by the workflow creation server 1 is displayed on the creator terminal 2. In the present example, the creator logs in to the workflow creation server 1 via the creation screen using his or her own creator ID (ACT11). Then, on the creation screen, a cloud service to be used in the workflow being created is selected and designated and a company account that is registered in the cloud service in advance, which may be an account of a company to which the creator belongs, can be input (ACT12).

When the workflow creation server 1 acquires the selection of the cloud service and the company account from the creator terminal 2 (ACT13), the creator logs in to the cloud service providing server 5 of the selected cloud service using the company account (ACT14). Then, the workflow creation server 1 searches for a shared folder in the cloud storage, which is the storage destination used in the workflow and is provided by the cloud service providing server 5 in association with the company account (ACT15). The workflow creation server 1 stores the cloud service ID, the company account, and the storage destination folder in the management table storage unit 133 in association with the creator ID that was used to log in to the workflow creation server 1 (ACT16). Here, the cloud service ID is acquired from the creator terminal 2 for specifying a cloud service that has been selected by the creator and the company account is also acquired from the creator terminal 2. In addition, the storage destination folder is information indicating the shared folder associated with the company account.

The creator performs a creation operation to create a desired workflow on a creation screen provided by the workflow creation server 1 and displayed on the creator terminal 2 (ACT17). The workflow creation server 1 creates a workflow in accordance with the creation operation and stores the created workflow in the workflow storage unit 132 (ACT18). In the creation of this workflow, when the workflow being created requires uploading of a file to a cloud storage, the workflow creation server 1 sets and defines a cloud ID and a storage destination folder stored in the management table storage unit 133 as an uploading destination for the workflow.

When the creation of the workflow is completed, the workflow creation server 1 creates a workflow list, which is a list of the workflows stored in the workflow storage unit 132, and transmits the workflow list to the user setting server 4 (ACT19). The workflow list may simply be a list of the names of the workflows or may include some additional information such as the creator's name and the name of a cloud service used. The user setting server 4 stores the workflow list transmitted from the workflow creation server 1 in the workflow list storage unit 433 (ACT20).

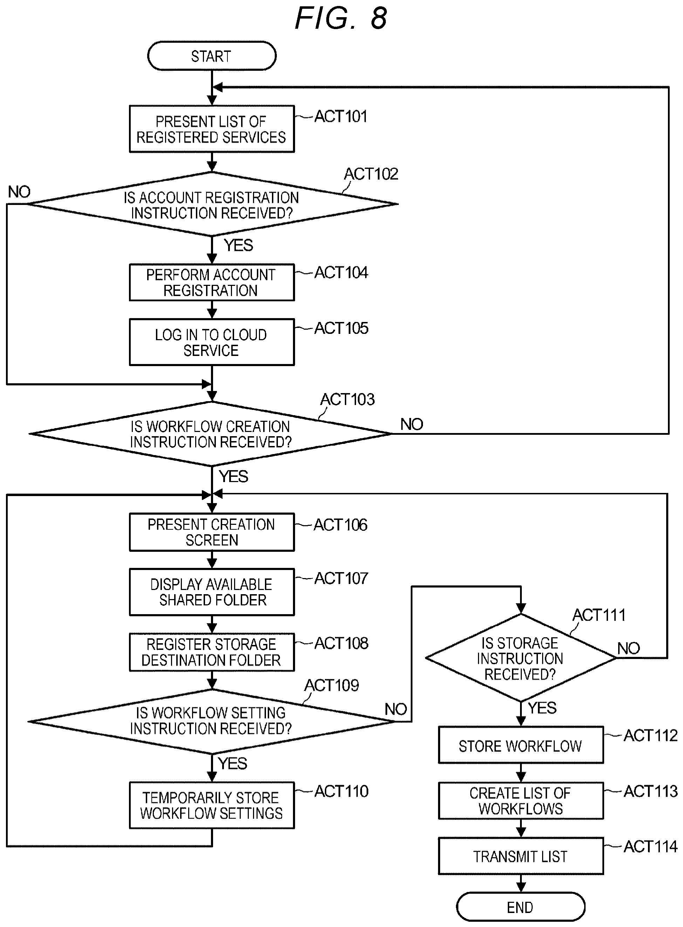

The operation of the workflow creation server 1 for creating a workflow will be described below. FIG. 8 is a flowchart showing an example of a workflow creation processing operation executed by the processor 11 of the workflow creation server 1. FIG. 8 shows operations after a creator logs in with a creator ID. The processor 11 can perform the workflow creation processing operation by executing a workflow creation program stored as a control program stored in the workflow creation program storage unit 13 of the auxiliary storage device 131. Unless otherwise specified, it is assumed that the processing operation of the processor 11 shown in the flowchart in FIG. 8 transitions from ACTn (n is a natural number.) to ACT(n+1). The same applies to flowcharts in other drawings.

In ACT101, the processor 11 transmits screen data of a registered service list screen to the creator terminal 2 via the network NW through the communication interface 14, thereby presenting the registered service list on the output device 26 of the creator terminal 2. The processor 11 can create the registered service list screen on the basis of the information stored in the management table storage unit 133 in association with the creator ID of the logged-in creator.

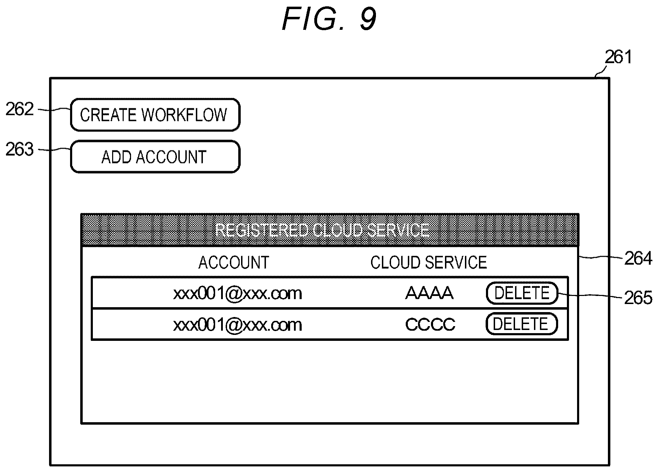

FIG. 9 is a diagram showing an example of a registered service list screen 261 presented on the creator terminal 2. As shown in FIG. 9, the registered service list screen 261 can include a "Create workflow" button 262, an "Add account" button 263, and a registered service list 264. The "Create workflow" button 262 is a button that is operated when instructing the creation of a workflow. The "Add account" button 263 is a button that is operated when instructing the addition of an account for a cloud service to be used. The registered service list 264 displays a cloud service ID and a company account for a registered cloud service. The registered service list 264 can also include a "Delete" button 265 that is operated when instructing the deletion of the account for the cloud service.

Returning to the description of FIG. 8, in ACT102, the processor 11 determines whether an account registration instruction has been received from the creator terminal 2 in response to the operation of the "Add account" button 263. When the account registration instruction has been received, the processor 11 determines YES in ACT102 and proceeds to the processing of ACT104. When an account registration instruction has not been received, the processor 11 determines NO in ACT102 and proceeds to the processing of ACT103.

In ACT 103, the processor 11 determines whether a workflow creation instruction according to the operation of the "Create workflow" button 262, which is transmitted from the creator terminal 2 via the network NW, has been received through the communication interface 14. When the workflow creation instruction has been received, the processor 11 determines YES in ACT103 and proceeds to the processing of ACT106. When the workflow creation instruction has not been received, the processor 11 determines NO in ACT103 and returns to the processing of ACT101.

In ACT104, the processor 11 performs an account registration process. In this account registration process, the processor 11 transmits screen data of the account registration screen to the creator terminal 2 via the network NW through the communication interface 14, thereby causing the display on the creator terminal 2 to transition from the registered service list screen 261 to the account registration screen. The processor 11 receives a cloud service and account to be added, which are designated on the account registration screen and are transmitted from the creator terminal 2 via the network NW, through the communication interface 14 and stores the cloud service and account to be added in the management table storage unit 133.

In ACT105, the processor 11 logs in to the cloud service providing server 5 of the cloud service designated using the registered company account. Thereafter, the processor 11 proceeds to the processing of ACT103.

In ACT106, the processor 11 presents the workflow creation screen to the creator terminal 2 by transmitting screen data of the workflow creation screen to the creator terminal 2 via the network NW through the communication interface 14.

In ACT107, the processor 11 displays an available shared folder on the creator terminal 2. Specifically, the processor 11 searches for an available shared folder that is prepared in advance in the cloud storage of the logged-in cloud service providing server 5. The processor 11 then transmits screen data that displays the searched available shared folder on the workflow creation screen to the creator terminal 2.

In ACT108, the processor 11 registers the searched available shared folder in the management table storage unit 133 as a storage destination folder.

The processing operation when an account deletion instruction according to the operation of the "Delete" button 265 is omitted in FIG. 8 because only the corresponding information is deleted from the management table storage unit 133.

In ACT109, the processor 11 determines whether a workflow setting instruction transmitted from the creator terminal 2 via the network NW in response to a workflow setting operation on the workflow creation screen of the creator terminal 2 has been received through the communication interface 14. When a workflow setting instruction has not been received, the processor 11 determines NO in ACT109 and proceeds to the processing of ACT111. When the workflow setting instruction has been received, the processor 11 determines YES in ACT109 and proceeds to the processing of ACT110.

In ACT110, the processor 11 temporarily stores workflow settings according to the received workflow setting instruction in the main memory 12 or the auxiliary storage device 13. In this context, a workflow setting instruction includes an instruction to set an uploading destination when the workflow being created includes requires uploading of a file to a cloud storage. Since the instruction to set an uploading destination includes designation of a cloud service ID, the processor 11 acquires a company account and storage designation folder corresponding to the designated cloud service ID from the management table storage unit 133 as an uploading destination, and temporarily stores the company account and the storage designation folder for a workflow to be created. Thereafter, the processor 11 proceeds to the processing of ACT106 described above and presents a workflow creation screen that reflects the settings of the workflow to be created in response to the setting instruction.

In ACT 111, the processor 11 determines whether a storage instruction transmitted from the creator terminal 2 via the network NW in response to a workflow storage operation on the workflow creation screen of the creator terminal 2 has been received through the communication interface 14. When a storage instruction has not been received, the processor 11 determines NO in ACT 111 and proceeds to the processing of ACT108 described above. When a storage instruction has been received, the processor 11 determines YES in ACT111 and proceeds to the processing of ACT112.

In ACT112, the processor 11 stores a workflow based on the temporarily stored workflow settings in the workflow storage unit 132 as the created workflow.

In ACT113, the processor 11 creates a workflow list, which is a list of the workflows stored in the workflow storage unit 132, including the currently registered workflow.

In ACT114, the processor 11 transmits the created workflow list to the user setting server 4 via the network NW through the communication interface 14. Then, the processor 11 ends the workflow creation processing operation shown in this flowchart.

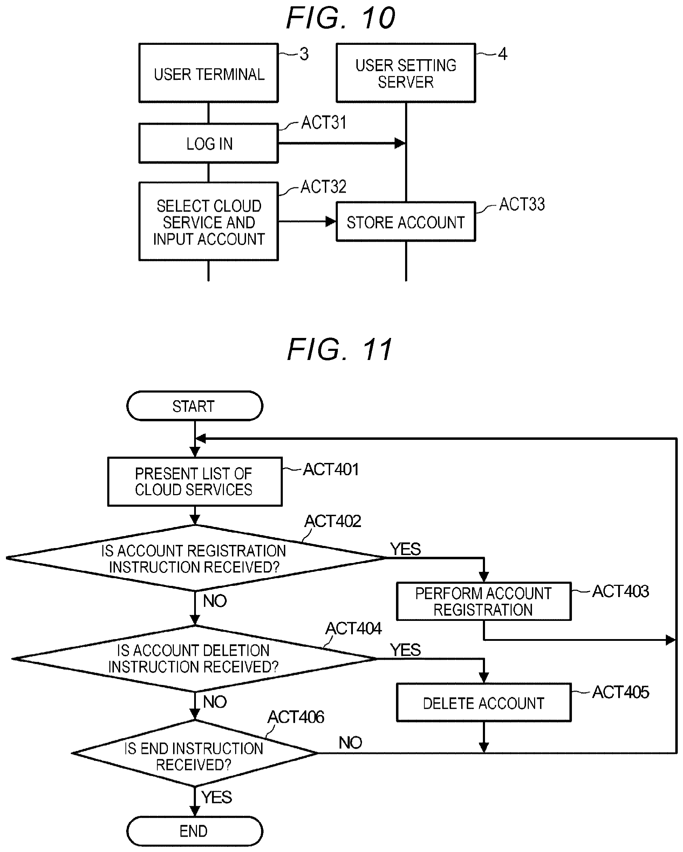

Next, operations when registering an account of a user who uses a cloud service in the information processing system will be described. FIG. 10 is a sequence diagram showing operations when registering an account of a user who uses a cloud service in the service providing system according to the first embodiment.

When the user instructs the user setting server 4 to execute a user setting program from the user terminal 3, a predetermined registration screen provided by the user setting server 4 is displayed on the user terminal 3. Here, the user logs in to the user setting server 4 using his or her own user ID on this registration screen (ACT31). Then, on the registration screen, the user selects and designates a cloud service that is likely to be used, and inputs his or her own account that is registered in advance in the cloud service as a user account (ACT32).

When the user setting server 4 acquires the cloud service selection result and the user account from the user terminal 3, the user setting server 4 stores a cloud service ID of the acquired selected cloud service and the acquired user account in the user setting storage unit 432 in association with the user ID used for the logging-in of the user setting server 4 (ACT33).

Hereinafter, operations of the user setting server 4 for implementing such operations when registering a user account of a user will be described. FIG. 11 is a flowchart showing an example of an account registration processing operation executed by the processor 41 of the user setting server 4. FIG. 11 shows operations after the user logs in with a user ID. The processor 41 can perform the account registration processing operation by executing a user setting program as a control program stored in the user setting program storage unit 431 of the auxiliary storage device 43.

In ACT401, the processor 41 presents a cloud service list on the output device 36 of the user terminal 3 by transmitting screen data of a cloud service list screen to the user terminal 3 via the network NW through the communication interface 44. In some examples, processor 41 may create the cloud service list screen on the basis of information about available cloud services that is registered in advance and information that is stored in the user setting storage unit 432 in association with a user ID of a logged-in user.

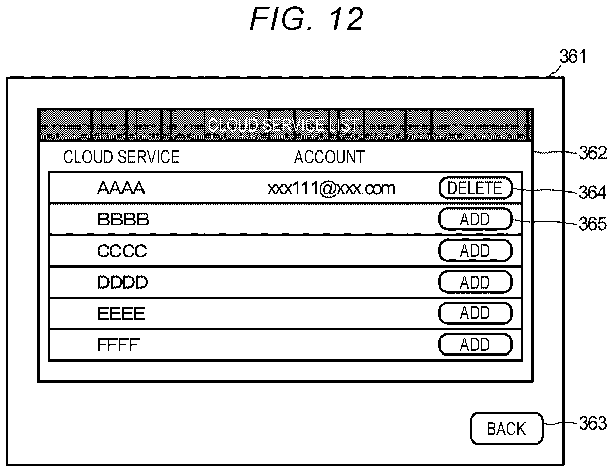

FIG. 12 is a diagram showing an example of a cloud service list screen 361 displayed on the user terminal 3. As shown in FIG. 12, the cloud service list screen 361 can include an available service list 362 and a "Back" button 363. The available service list 362 displays a list of available cloud services that are registered in advance, and also displays a user account of a logged-in user when the user account is registered in one of the cloud services. In addition, an available service list 362 includes a "Delete" button 364 for a cloud service in which a user account is registered, and an "Add" button 365 for a cloud service in which a user account is not registered. The "Delete" button 364 is a button that is operated when instructing the deletion of an account of the cloud service. The "Add" button 365 is a button that is operated when instructing the addition of an account of the cloud service. The "Back" button 363 is a button that is operated when instructing the end of the account registration processing operation.

Returning to the description of FIG. 11, in ACT402, the processor 41 determines whether an account registration instruction has been received from the user terminal 3 via the network NW through the communication interface 44 in response to the operation of the "Add" button 365. When an account registration instruction has not been received, the processor 41 determines NO in ACT402 and proceeds to the processing of ACT404. When an account registration instruction has been received, the processor 41 determines YES in ACT402 and proceeds to the processing of ACT403.

In ACT403, the processor 41 performs an account registration process. The account registration process is a process in which the designation of a cloud service to be added and an account, which are subsequently transmitted from the user terminal 3 via the network NW, are received through the communication interface 44, and stored in the user setting storage unit 432. Thereafter, the processor 41 proceeds to the processing of ACT401 described above.

In ACT404, the processor 41 determines whether an account deletion instruction has been received from the user terminal 3 via the network NW through the communication interface 44 in response to the operation of the "Delete" button 364. When an account deletion instruction has not been received, the processor 41 determines NO in ACT404 and proceeds to the processing of ACT406. When an account deletion instruction has been received, the processor 41 determines YES in ACT404 and proceeds to the processing of ACT405.

In ACT405, the processor 41 performs an account deletion process. The account deletion instruction includes the designation of a cloud service to be deleted. Thus, in the account deletion process, the processor 41 deletes a cloud service ID and a user account for the cloud service stored in the user setting storage unit 432. Thereafter, the processor 41 proceeds to the processing of ACT401 described above.

In ACT406, the processor 41 determines whether an end instruction has been received via the network NW through the communication interface 44 in response to the operation of the "Back" button 363. When an end instruction has not been received, the processor 41 determines NO in ACT406 and proceeds to the processing of ACT401 described above. When an end instruction has been received, the processor 41 determines YES in ACT406 and ends the account registration processing operation shown in this flowchart.

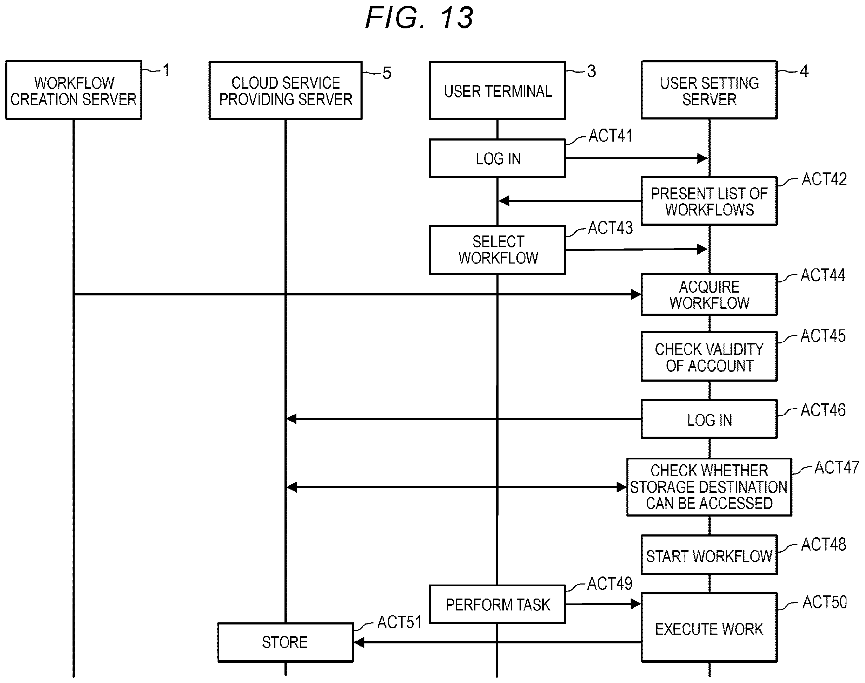

Next, operations when executing a workflow in the information processing system will be described. FIG. 13 is a sequence diagram showing operations when executing a workflow in the service providing system according to the first embodiment.

When a user instructs the user setting server 4 to execute a workflow execution program from the user terminal 3, a predetermined login screen provided by the user setting server 4 is displayed on the user terminal 3. Here, the user logs in to the user setting server 4 using his or her own user ID on this login screen (ACT41).

When the user logs in, the user setting server 4 transmits data of a workflow list screen based on the workflow list stored in the workflow list storage unit 433 to the user terminal 3, causing the user terminal 3 to present a list of workflows (ACT42).

On the user terminal 3, a workflow to be executed is selected from the list of workflows (ACT43).

The user setting server 4 receives the selection of the workflow to be executed, acquires the selected workflow from the workflow creation server 1, and stores the acquired workflow in the selected workflow storage unit 435 (ACT44). As described above, when the workflow requires uploading of a file to a cloud storage when the workflow is executed, a cloud ID and a storage destination folder are set and defined in the workflow as an uploading destination.

Consequently, the user setting server 4 checks whether the account is valid (ACT45). That is, the user setting server 4 confirms whether a user account corresponding to the cloud ID defined in the workflow (just stored in the selected workflow storage unit 435) is present and associated with the user ID of the logged-in user stored in the user setting storage unit 432. When the user account is present/valid, the user setting server 4 logs in to the cloud service providing server 5 with the user account (ACT46).

Furthermore, the user setting server 4 checks whether the storage destination folder can be accessed (ACT47). That is, the user setting server 4 checks whether the storage destination folder that was set and defined in the workflow stored in the selected workflow storage unit 435 can be accessed. When the storage destination folder can be accessed, the user setting server 4 begins executing the workflow stored in the selected workflow storage unit 435 (ACT48).

A task related to a series of works (steps) defined in the workflow is performed on the user terminal 3 (ACT49), and the user setting server 4 executes the workflow on the basis of the result of the task performed on the user terminal 3, that is, executes each work (step) defined in the workflow (ACT50).

When a file needs to be uploaded while the workflow is being executed in this manner, the user setting server 4 uploads the file. The uploading destination is a storage destination folder of the cloud storage of the cloud service providing server 5 that is set and defined in the workflow. The user setting server 4 uploads the file to the storage destination folder as set and defined in the workflow by using the user account of the logged-in user stored in the user setting storage unit 432 instead of the company account used when the workflow was created.

The cloud service providing server 5 that receives the uploaded file stores the file in the storage destination folder of the cloud storage designated as the uploading destination (ACT51).

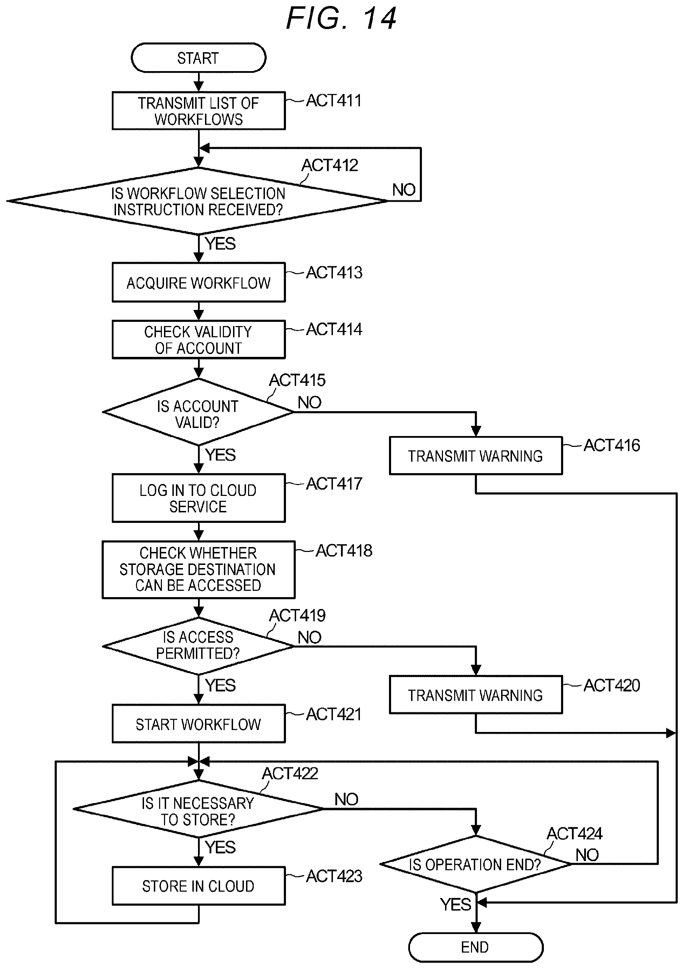

Hereinafter, operations of the user setting server 4 for implementing such operations when executing a workflow will be described. FIG. 14 is a flowchart showing an example of a processing operation during execution of a workflow by the processor 41 of the user setting server 4. FIG. 14 shows operations after a user logs in with a user ID. The processor 41 can perform the processing operation during execution of the workflow by executing a workflow execution program (a control program) stored in the workflow execution program storage unit 434 of the auxiliary storage device 43.

In ACT411, the processor 41 transmits data of a workflow list screen based on the workflow list stored in the workflow list storage unit 433 to the user terminal 3 via the network NW through the communication interface 44.

In ACT412, the processor 41 determines whether a workflow selection instruction according to a workflow selection operation has been received from the user terminal 3 via the network NW through the communication interface 44. When a workflow selection instruction has not been received, the processor 41 determines NO in ACT412 and repeats the processing of ACT412. In this manner, the processor 41 waits for a workflow selection instruction to be transmitted. When a workflow selection instruction has been received, the processor 41 determines YES in ACT412 and proceeds to the processing of ACT413.

In ACT413, the processor 41 acquires a workflow indicated by the received workflow selection instruction from the workflow creation server 1 via the network NW through the communication interface 44, and stores the acquired workflow in the selected workflow storage unit 435.

In ACT414, the processor 41 checks whether the user account associated with the user ID of the logged-in user stored in the user setting storage unit 432 is valid for the cloud service of the cloud ID set and defined in the workflow stored in the selected workflow storage unit 435.

In ACT415, the processor 41 determines whether the result of the account validity check is valid. When the user account is valid, the processor 41 determines YES in ACT415 and proceeds to the processing of ACT417. When the user account is not valid, the processor 41 determines NO in ACT415 and proceeds to the processing of ACT416.

In ACT416, the processor 41 transmits a warning to the user terminal 3 of the logged-in user via the network NW through the communication interface 44. Then, the processor 41 ends the processing operation during the execution of the workflow shown in this flowchart.

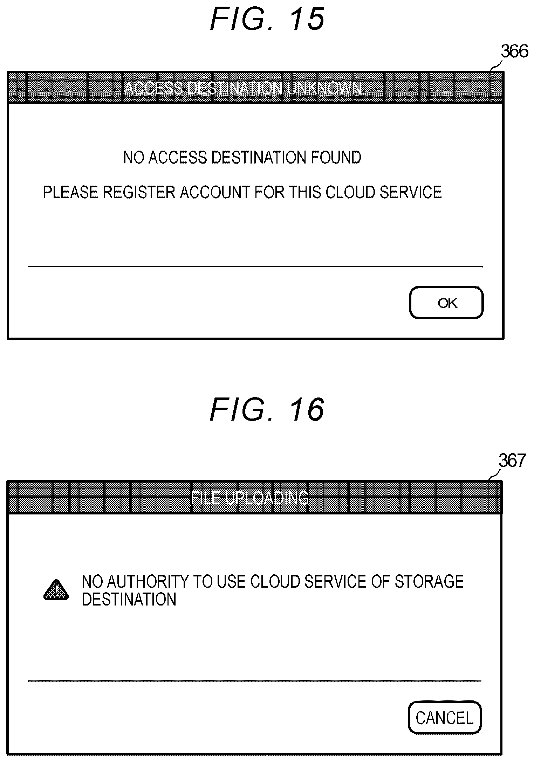

On the user terminal 3 that receives this warning, an account invalid warning window is displayed. FIG. 15 is a diagram showing an example of an account invalid warning window 366 that is displayed on the user terminal 3 when it is confirmed that a valid user account is not registered prior to the execution of a workflow. As shown in FIG. 15, the account invalid warning window 366 is in a state where a storage destination set and defined in a workflow selected by a user cannot be accessed, and can include a warning message for urging the registration of a valid user account.

Returning to the description of FIG. 14, in ACT417, the processor 41 logs in to the cloud service set and defined in the selected workflow stored in the selected workflow storage unit 435 via the network NW through the communication interface 44 by using the user account determined to be valid.

In ACT418, the processor 41 checks whether access to the storage destination folder that is set and defined in the workflow is permitted, via the network NW through the communication interface 44.

In ACT419, the processor 41 determines whether the result of the checking of whether access to the storage destination folder is permitted indicates permission of access. When access is permitted, the processor 41 determines YES in ACT419 and proceeds to the processing of ACT421. When access is not permitted, the processor 41 determines NO in ACT419 and proceeds to the processing of ACT420.

In ACT420, the processor 41 transmits a warning to the user terminal 3 of the logged-in user via the network NW through the communication interface 44. The processor 41 then ends the processing operation during the execution of the workflow shown in this flowchart.

When the user terminal 3 receives this warning, an access denial warning window is displayed. FIG. 16 shows an example of an access denial warning window 367 that is displayed on the user terminal when it is confirmed that a storage destination folder of a cloud service cannot be accessed prior to the execution of the workflow. As shown in FIG. 16, the access denial warning window 367 can include a warning message for giving a notification indicating that there is no authority to use the storage destination folder that is set and defined in the workflow selected by the user.

Returning to the description of FIG. 14, in ACT421, the processor 41 starts executing the selected workflow stored in the selected workflow storage unit 435.

In ACT422, the processor 41 determines whether it is necessary to upload a file, that is, to store the file in the storage destination folder of the cloud storage while executing each work defined in the workflow. When it is not necessary to store the file in the storage destination folder, the processor 41 determines NO in ACT422 and proceeds to the processing of ACT424. When it is necessary to store the file in the storage destination folder, the processor 41 determines YES in ACT422 and proceeds to the processing of ACT423.

In ACT423, the processor 41 transmits the file to the cloud service providing server 5 of the storage destination folder that is set and defined in the workflow via the network NW through the communication interface 44, and stores the file in the storage destination folder of the corresponding cloud storage. At this time, the user logs in to the cloud service providing server 5 in ACT417 with a user account which is an account for the cloud service providing server 5. Thus, the file uploading is performed using the user account instead of the company account used when creating the workflow. The processor 41 then proceeds to the processing of ACT422 described above.

In ACT424, the processor 41 determines whether to end the workflow execution processing operation shown in this flowchart. This determination can be made, for example, on the basis of whether an end instruction has been received from the user terminal 3 of the logged-in user via the network NW through the communication interface 44. This determination may also be made on the basis of whether all the work defined in the workflow is ended. When the workflow execution processing operation is not ended, the processor 41 determines NO in ACT424 and proceeds to the processing of ACT422 above. When the workflow execution processing operation is ended, the processor 41 determines YES in ACT424 and ends this workflow execution processing operation.

As described above, the service providing system according to the first embodiment creates a workflow in response to an operation of the workflow creator at the creator terminal 2, and the workflow creation server 1 creates a workflow including access to a cloud service (provided by the cloud service providing server 5) by using a company account for accessing the cloud service. In this manner, the processor 11 is an example of a creation unit, and the company account is an example of a first account. In addition, the service providing system registers a user account associated with a user for accessing the cloud service in response to an instruction from the user terminal 3 via the network NW by the processor 41 of the user setting server 4, and when the workflow is executed in response to an instruction from the user via the network NW, the cloud service is accessed using a user account associated with the user who gives the instruction, the user account being registered instead of the company account. In this manner, the processor 41 of the user setting server 4 is an example of a registration unit and an execution unit, and the user account is an example of a second account.

In addition, the user setting server 4, which is an example of the information processing device according to the first embodiment, is configured to cause the processor 41 to store a user account associated with a user for accessing the cloud service provided by the cloud service providing server 5 in the user setting storage unit 432 of the auxiliary storage device 13 in response to an instruction from the user via the network NW, and to access the cloud service by using the user account associated with the user giving an instruction stored in the user setting storage unit 432 instead of a company account for accessing the cloud service, when a workflow including access to the cloud service created using the company account is executed in response to an instruction from the user via the network NW. The user setting storage unit 432 is an example of a storage unit that stores information based on an instruction received from a user.

In this manner, in the first embodiment, a workflow that includes access to the cloud service is created using the company account, and the user registers a user account for executing the workflow. When the user executes the workflow, the user accesses the cloud service by using the user account instead of the company account. Thus, according to the first embodiment, when accessing the cloud service within the workflow, it becomes possible to use an account for each user without reusing accounts.

Further, in the first embodiment, when executing a workflow, the processor 41 of the user setting server 4 confirms whether a user account associated with a user who gives an instruction is registered, and when a user account is not registered, a warning is issued to the user terminal 3 of the user who gives the instruction via the network NW without executing the workflow.

Thus, according to the first embodiment, when an account of a cloud service associated with an individual user is not registered at the time the user executes a workflow, a warning is issued and the workflow is not completed. Thus, the user can receive the warning before the workflow is executed, and it is possible to prevent the user from executing the workflow unnecessarily.

Further, in the first embodiment, the cloud service provided by a cloud service providing server 5 is a cloud storage service with a storage destination folder for storing files therein. When a user executes a workflow, the processor 41 of the user setting server 4 confirms whether the storage destination folder of the cloud storage can be accessed using a user account associated with a registered user who gives the instruction. When the storage destination folder cannot be accessed, a warning is issued to the user terminal 3 of the user who gives the instruction without executing the workflow.

Thus, according to the first embodiment, it can be confirmed in advance whether a storage destination for a workflow can be accessed by an account of a cloud service associated with an individual user when the user executes (initiates) the workflow. When the storage destination cannot be accessed, a warning is issued and the workflow is not executed (completed). Thus, the user can receive the warning, and it is possible to prevent the user from executing a workflow unnecessarily.

### Second embodiment

In the first embodiment, description is given of an example in which the cloud service providing server 5 prepares a shared folder (serving as a storage destination folder) in advance in a cloud storage. The shared folder is associated with an account of a creator and an account of each user linked to the creator. However, the shared folder does not necessarily have to be prepared in advance in all examples. For example, the shared folder may be created when the workflow is created. This will be described below as a second embodiment. The same aspects and operations as those in the first embodiment present in the second embodiment are given the same reference numerals as in the first embodiment, and the description thereof may be omitted.

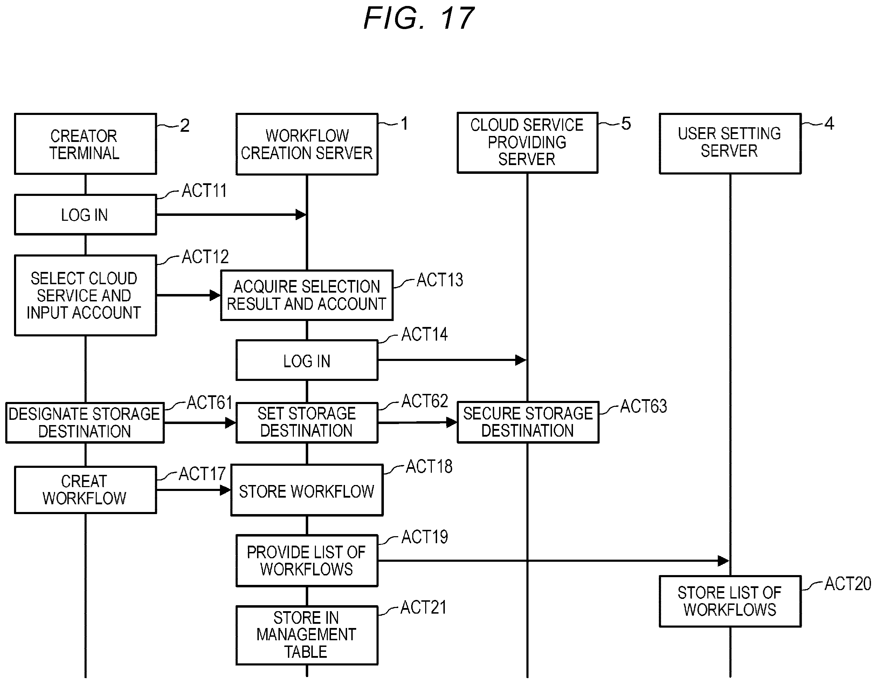

FIG. 17 is a sequence diagram showing operations when creating a workflow in a service providing system according to the second embodiment.

ACTs 11 to 14 are as described in the first embodiment with reference to FIG. 7.

After a creator selects and designates a cloud service and inputs a company account from the creator terminal 2 in ACT12, the creator further designates a storage destination folder to be created in a cloud storage (ACT61). The designation of the storage destination folder includes a user account of each user who shares a shared folder.

In response to the designation of the storage destination folder from the creator terminal 2, the workflow creation server 1 instructs the cloud service providing server 5, which is logged in with a company account, to set the designated storage destination folder (ACT62).

Upon receiving this instruction, the cloud service providing server 5 registers the user account of the sharing user and secures the instructed storage destination folder in a cloud storage (ACT63). Thereafter, ACTs 17 to 21 are performed as described in the first embodiment.

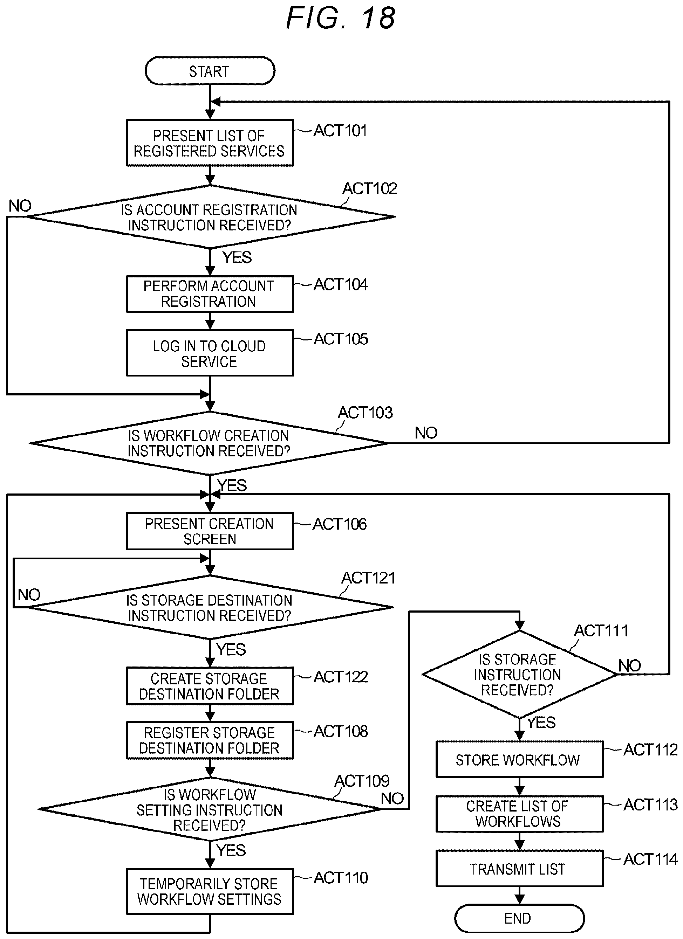

Hereinafter, operations of the workflow creation server 1 for implementing such operations when creating a workflow will be described. FIG. 18 is a flowchart showing an example of a workflow creation processing operation executed by the processor 11 of the workflow creation server 1.

The processing of ACT101 to ACT106 and the processing of ACT108 to ACT114 are as described in the first embodiment with reference to FIG. 8. In the first embodiment, the processor 11 searches for an available shared folder in ACT107 and displays the available shared folder on the creator terminal 2. On the other hand, in this second embodiment, the processor 11 executes processing for creating an available shared folder in the cloud storage of the logged-in cloud service providing server 5.

That is, following the processing of ACT106, the processor 11 determines in ACT121 whether a storage destination instruction transmitted from the creator terminal 2 via the network NW has been received through the communication interface 14. This storage destination instruction is transmitted in response to an operation of designating a storage destination folder on an account registration screen of the creator terminal 2 and a user account of each user who shares the storage destination folder. That is, the storage destination instruction includes information on the storage destination folder and the user account. Alternatively, the storage destination instruction may include only the storage destination folder and subsequently receive the designation of the user account. When the storage destination instruction has not been received, the processor 11 determines NO in ACT121 and repeats the processing of ACT121. In this manner, the processor 11 waits for the storage destination instruction to be transmitted. When the storage destination instruction has been received, the processor 11 determines YES in ACT121 and proceeds to the processing of ACT122.

In ACT122, the processor 11 causes the cloud service providing server 5, which is logged in with a company account, to create a storage destination folder. Specifically, the processor 11 instructs the corresponding cloud service providing server 5 to create the designated storage destination folder via the network NW through the communication interface 44. The processor 11 also transmits a list of accounts that share the storage destination folder to the cloud service providing server 5 via the network NW through the communication interface 44. These accounts include a company account and a user account. The processor 11 then proceeds to the processing of ACT 108 described above.

As described above, the service providing system according to the second embodiment and the user setting server 4 according to the second embodiment can achieve substantially the same effects as in the first embodiment.

Furthermore, according to the second embodiment, when the processor 11 of the workflow creation server 1 sets a storage destination folder (as a cloud service to be accessed) in a workflow, the processor 11 registers sharing settings of the storage destination folder and a user account that is to be shared, that is, accessible, in the cloud service providing server 5 that provides the cloud service.

Thus, according to the information processing system and the information processing device according to the second embodiment, even when the cloud service to be accessed and the user account that is accessible are not registered in the cloud service in advance, they can be registered in the cloud service when creating a workflow.

### Third embodiment

In the first and second embodiments, description is given of an example in which, when a user executes (starts) a workflow, a user account of the user is already registered in the user setting server 4. However, the user account does not necessarily have to be registered in advance. Depending on a workflow to be executed, there may be an available workflow that does not need to access a cloud service. As such, a user account may not need to be registered when the execution of such a workflow is started and a user account may only need to be registered when access to the cloud service is required. Accordingly, user account registration may wait until a workflow that requires access to the cloud service is started by the user. This arrangement will be described below as a third embodiment. The same configurations and operations as those in the first embodiment are given the same reference numerals as those in the first embodiment, and the description thereof will be omitted.

In this third embodiment, an operation for registering a user account in advance (as previously described with reference to FIGS. 10 and 11) is not performed. Instead, a user setting program is incorporated into a workflow execution program, and thus the auxiliary storage device 43 of the user setting server 4 does not have to include the user setting program storage unit 431. Alternatively, the user setting program storage unit 431 may be left to call the workflow execution program from the workflow execution program.

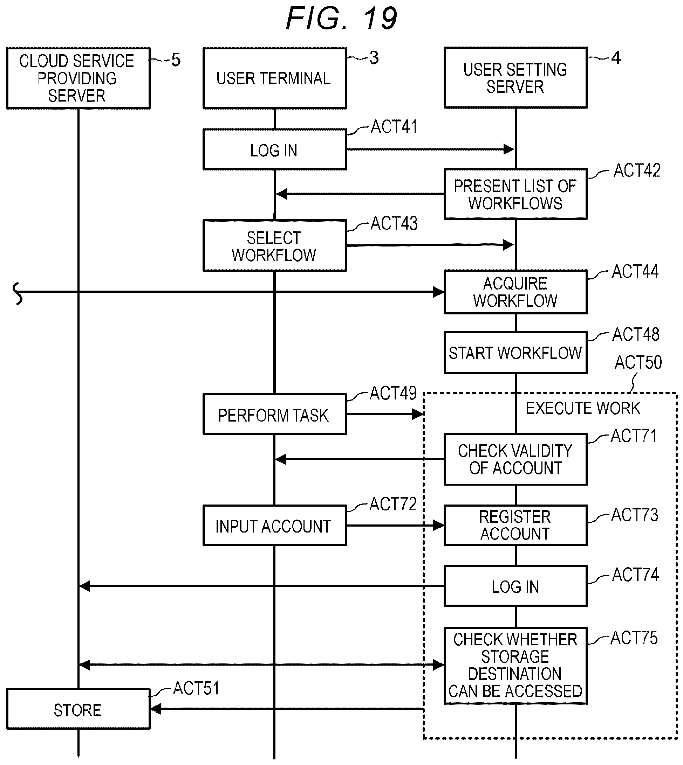

FIG. 19 is a sequence diagram showing operations when executing a workflow in a service providing system according to the third embodiment.

ACTs 41 to 44 are as described in the first embodiment with reference to FIG. 13.

In this third embodiment, once the user setting server 4 acquires a workflow selected from the workflow creation server 1 in ACT44 and stores the workflow in the selected workflow storage unit 435, the user setting server 4 immediately starts executing the workflow (ACT48).

Then, as described in the first embodiment, a task defined in the workflow is performed on the user terminal 3 (ACT49), and the user setting server 4 executes the workflow on the basis of the result of the task performed on the user terminal 3, that is, executes each work (process step) defined in the workflow (ACT50).

When a file needs to be uploaded while executing the workflow in this manner, the user setting server 4 checks whether an account is valid (ACT71). That is, the user setting server 4 confirms whether a user account corresponding to a cloud ID set and defined in the workflow stored in the selected workflow storage unit 435 is stored in association with a user ID of a logged-in user stored in the user setting storage unit 432. When the user account is stored, the user setting server 4 proceeds to ACT74. When the user account is not stored, the user setting server 4 displays an input screen for the user account on the user terminal 3. The input screen includes information on a cloud service of a storage destination folder that is set and defined in the workflow.

The user inputs his or her own user account for the cloud service on this input screen (ACT72).

The user setting server 4 acquires this user account from the user terminal 3 and registers the user account (ACT73). That is, the user setting server 4 stores a cloud service ID of a cloud service set and defined in the workflow and the acquired user account in the user setting storage unit 432, in association with the user ID used to log in to the user setting server 4.

Then, the user setting server 4 logs in to the corresponding cloud service providing server 5 with the registered user account (ACT74).

Furthermore, the user setting server 4 checks whether the storage destination can be accessed (ACT75). That is, the user setting server 4 confirms whether the storage destination folder that is set and defined in the workflow can be accessed. When the storage destination folder can be accessed, the user setting server 4 uploads a file to the storage destination folder of the cloud storage of the cloud service providing server 5 that is set and defined in the workflow by using the user account of the logged-in user stored in the user setting storage unit 432.

As described in the first embodiment, the cloud service providing server 5 that receives the uploaded file stores the file in the storage destination folder of the cloud storage designated as an uploading destination (ACT51).

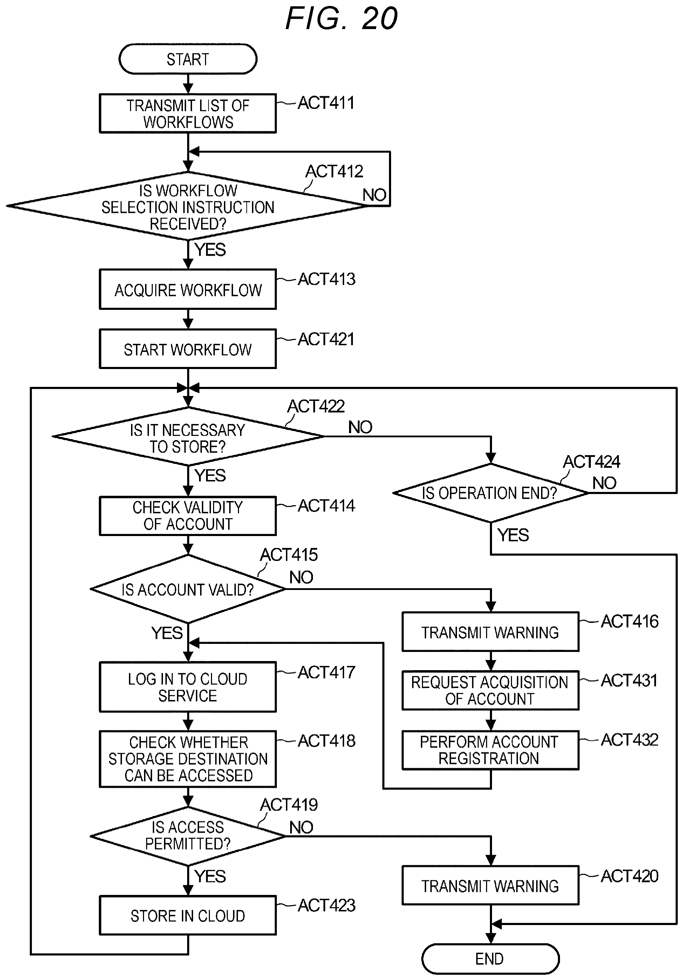

Hereinafter, operations of the user setting server 4 for implementing such operations when executing a workflow will be described. FIG. 20 is a flowchart showing an example of a processing operation when a workflow is executed by the processor 41 of the user setting server 4.

The processing of ACT411 to ACT413 is as described in the first embodiment with reference to FIG. 14.

The processor 41 acquires a workflow from the workflow creation server 1 in ACT413 and stores the workflow in the selected workflow storage unit 435. Then, in this embodiment, the execution of the selected workflow stored in the selected workflow storage unit 435 is started in ACT421.

In ACT422, the processor 41 determines whether it is necessary to upload a file, that is, to store the file in the storage destination folder of the cloud storage, while executing each work (process step) defined in the workflow. When it is not necessary to store the file in the storage destination folder, the processor 41 determines NO in ACT422 and proceeds to the processing of ACT424. When it is necessary to store the file in the storage destination folder, the processor 41 determines YES in ACT422 and proceeds to the processing of ACT414 in this embodiment.

The processing of ACT414 to ACT416 is as described in the first embodiment.

After transmitting a warning indicating that the account is invalid to the user terminal 3 in ACT416, in this embodiment, the processor 41 transmits an account acquisition request to the user terminal 3 via the network NW through the communication interface 44 in ACT431. This account acquisition request can include data of an input screen for a user account, the data including information on the cloud service of the storage destination folder that is set and defined in the workflow.

In ACT432, the processor 41 performs an account registration process. This account registration process is a process in which the user account transmitted from the user terminal 3 via the network NW is received through the communication interface 44 and stored in the user setting storage unit 432. Thereafter, the processor 41 proceeds to the processing of ACT417.

The processing of ACT417 to ACT420 is as described in the first embodiment. However, when the access is permitted and YES is determined in ACT419, in the first embodiment, the process proceeds to the processing of ACT421. However, in this embodiment, the process proceeds to the processing of ACT423. The processing of ACT423 is as described in the first embodiment, and the processor 41 then proceeds to the processing of ACT422.

As described above, the service providing system according to the third embodiment and the user setting server 4 according to the third embodiment can achieve substantially the same effects as those of the first embodiment.

Furthermore, according to the third embodiment, the processor 41 of the user setting server 4 receives the registration of a user account from a user by operating the user terminal 3 when executing a workflow.

Thus, according to the third embodiment, the necessary user account can be obtained by the user's operation of the user terminal 3 only when a workflow that uses a user account is executed. In other words, when a workflow that does not use a user account is executed, the wasteful operation of registering a user account in advance can be omitted.

### Fourth embodiment

In the first to third embodiments, two independent servers, the workflow creation server 1 and the user setting server 4, are used, but the functions of both the servers may be implemented by one server. This will be described below as a fourth embodiment. The same configurations and operations as those in the first embodiment are given the same reference numerals as those in the first embodiment, and the description thereof will be omitted.

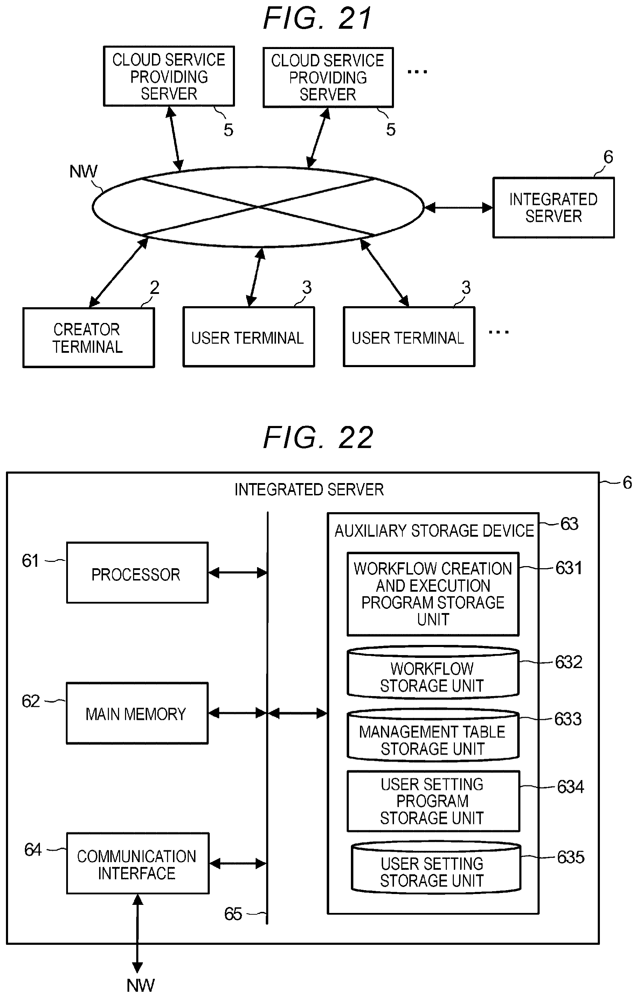

FIG. 21 is a block diagram showing an example of the overall configuration of a service providing system according to the fourth embodiment. In this fourth embodiment, instead of the workflow creation server 1 and the user setting server 4 shown in FIG. 1, an integrated server 6 is provided as an information processing device.

FIG. 22 is a block diagram showing an example of the configuration of the integrated server 6. The integrated server 6 may be an information processing apparatus such as a server computer. As shown in FIG. 22, the integrated server 6 includes a processor 61, a main memory 62, an auxiliary storage device 63, a communication interface 64, and the like. These components are connected to each other via a bus line 65 such as a data bus. The processor 61, the main memory 62, the communication interface 64, and the bus line 65 are similar to the processor 11, the main memory 12, the communication interface 14, and the bus line 15 of the workflow creation server 1 in the first embodiment. The auxiliary storage device 63 is a non-volatile internal storage to which data can be written and rewritten. For example, an inexpensive storage device with low fault tolerance, such as an HDD, an SSD, or a flash memory, is used for the auxiliary storage device 63. The auxiliary storage device 63 stores control programs, application programs, various data, and the like in accordance with the operational purpose of the integrated server 6. For example, the auxiliary storage device 63 includes a workflow creation and execution program storage unit 631, a workflow storage unit 632, a management table storage unit 633, a user setting program storage unit 634, and a user setting storage unit 635.

The workflow creation and execution program storage unit 631 causes the processor 61 to create a workflow in response to an instruction received from the creator terminal 2, and also stores a workflow creation and execution program for executing a workflow to be executed, in accordance with the selection of the workflow from the user terminal 3.

The workflow storage unit 632 and the management table storage unit 633 are similar to the workflow storage unit 132 and the management table storage unit 133 of the workflow creation server 1 described in the first embodiment. In addition, the user setting program storage unit 634 and the user setting storage unit 635 are similar to the user setting program storage unit 431 and the user setting storage unit 432 described in the first embodiment.

The auxiliary storage device 63 of the integrated server 6 does not include a storage unit equivalent to the workflow list storage unit 433 and the selected workflow storage unit 435 described in the first embodiment.

The integrated server 6 configured in this manner functions as the workflow creation server 1 in the first embodiment for the creator terminal 2. That is, the processor 61 stores a workflow that is set and defined by the creator's operation on the creator terminal 2 in the workflow storage unit 632 in accordance with the workflow creation and execution program stored in the workflow creation and execution program storage unit 631.

In addition, the integrated server 6 functions as the user setting server 4 in the first embodiment for the user terminal 3. That is, when a user account is registered, the processor 61 creates a workflow list on the basis of the workflows stored in the workflow storage unit 632 in accordance with the user setting program stored in the user setting program storage unit 634, and provides the workflow list to the user terminal 3. Then, the processor 61 acquires a cloud service selection result and a user account through the user's operation on the user terminal 3, and stores the cloud service selection result and the user account in the user setting storage unit 635.

Furthermore, when executing a workflow, the processor 61 receives the selection of a workflow to be executed from among the workflows stored in the workflow storage unit 632 from the user terminal 3 in accordance with the workflow creation and execution program stored in the workflow creation and execution program storage unit 631, and executes the selected workflow.

As described above, in the service providing system according to the fourth embodiment, the integrated server 6 implements the functions of the workflow creation server 1 and the user setting server 4 as described according to the first embodiment.

Thus, the information processing system and the information processing device according to the fourth embodiment can also achieve substantially the same effects as those of the first embodiment.

The above description is for a case where the integrated server 6 implements the functions of the workflow creation server 1 and the user setting server 4 according to the first embodiment, but the integrated server 6 can also or instead implement the functions of the workflow creation server 1 and the user setting server 4 as described for the second or third embodiments.

### Other embodiments

Although certain example embodiments of an information processing system and an information processing device are described, the present disclosure is not limited thereto.

For example, in the first to third embodiments, the workflow creation server 1 transmits a workflow list to the user setting server 4 and stores the workflow list in the workflow list storage unit 433. However, the user setting server 4 may request and acquire the workflow list from the workflow creation server 1 as necessary. Thereby, the workflow list storage unit 433 may be unnecessary.

The integrated server 6 according to the fourth embodiment may be, for example, a multi-function peripheral (MFP) placed in a workplace (e.g., an office) and having at least a scanning function, a printing function, and a communication function. In this case, the MFP with a scanning function can function as a user terminal 3 that executes a task of scanning documents. That is, the integrated server 6 in this case can also function as the user terminal 3, and thus the service providing system does not need to include a separate user terminal 3. In this case, a workflow to be created can be one in which optical character recognition is performed on scanned documents, and the scanned documents are uploaded to a cloud storage in a designated file format.

In addition, information processing flow performed by the processor 11, 21, or 61 described with reference to a flowchart is an example, but is not limited to such a process flow. For example, as long as there is no discrepancy with the preceding or subsequent processing, the order of processing may be changed or processes may be performed in parallel.

In some embodiments, a company account is an example of the first account, but, in other examples, the first account may be a group account for an organization (e.g., a sub-unit or division) within a company, a party, a club, an apartment complex or condominium building, or a neighborhood association. That is, the first account may be any account that is set up for multiple potential users.

In an embodiment, control programs are stored in advance in the auxiliary storage device 13 of the workflow creation server 1, the auxiliary storage device 23 of the user setting server 4, and/or the auxiliary storage device 63 of the integrated server. Such control programs may be transferred separately from each server and may be written to a writable storage device provided in each server in response to an operation by an administrator or the like. The transfer of these control programs can be performed by storing them in a removable computer-readable storage medium or by communication via a network. The format of the computer-readable storage medium does not matter as long as it can store a program and is readable by the device, such as a CD-ROM or a memory card.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. An information processing system, comprising:
a network;
a workflow creation server (1) accessible to a plurality of user terminals via the network; and
a user setting server (4) storing user settings for users of the user terminals, wherein
the workflow creation server is configured to:
create a workflow plan in response to an operation of a workflow creator at a creator terminal, the workflow plan including accessing a cloud service using a first cloud service account,
the user setting terminal registers a second cloud service account for accessing the cloud service in response to an instruction from a user at a user terminal, the second cloud service account being associated with the user, and
when the workflow plan is executed by the user via the network, the second cloud service account is used for accessing the cloud service instead of the first cloud service account.

2. The information processing system according to claim 1, wherein when the user begins execution of the workflow plan, the user setting server checks whether the second cloud service account associated with the user has been registered, and when the second cloud service account has not been registered, the workflow plan is not completed and a warning is issued to the user.

3. The information processing system according to claim 1 or 2, wherein
the cloud service is a service that provides a cloud storage having a storage destination folder for storing a file, and
when the user begins execution of the workflow plan, the user setting server checks whether the storage destination folder is accessible to user using the second cloud service account associated with the user, and when the storage destination folder is not accessible, the user setting server does not complete the workflow plan and issues a warning to the user.

4. The information processing system according to any one of claims 1 to 3, wherein the user setting server and the workflow creation server are connected by the network.

5. The information processing system according to any one of claims 1 to 4, wherein the user setting server and the workflow creation server are integrated as a single server.

6. The information processing system according to any one of claims 1 to 5, wherein the workflow creation server provides the workflow creator with a plurality of cloud service providers to select the cloud service accessed by the workflow plan.

7. The information processing system according to claim 1, wherein the workflow creation server stores a plurality of workflow plans associated with the workflow creator.

8. The information processing system according to claim 7, wherein the user setting server stores a plurality of workflow plans associated with the user.

9. An information processing device (4), comprising:
a network interface (44) connectable to a plurality of user terminals (3) via a network;
a storage unit storing user settings for users of the user terminals; and
a processor (41) configured to:
store a workflow plan created by an operation of a workflow creator at a creator terminal, the workflow plan being associated with a user of a user terminal and including accessing a cloud service using a first cloud service account, and
register a second cloud service account for accessing the cloud service in response to an instruction from the user at the user terminal, the second cloud service account being associated with the user, wherein
when the workflow plan is executed by the user via the network, the second cloud service account is used for accessing the cloud service instead of the first cloud service account.

10. The information processing device according to claim 9, wherein when the user begins execution of the workflow plan, the processor checks whether the second cloud service account associated with the user has been registered, and when the second cloud service account has not been registered, the workflow plan is not completed and a warning is issued to the user via the network.

11. The information processing device according to claim 9 or 10, wherein the cloud service is a service that provides a cloud storage having a storage destination folder for storing a file.

12. The information processing device according to claim 11, wherein when the user executes the workflow plan, the processor checks whether the storage destination folder is accessible to user using the second cloud service account associated with the user, and when the storage destination folder is not accessible, the workflow plan is not completed and a warning is issued to the user via the network.

13. The information processing device according to any one of claims 9 to 12, wherein a plurality of workflow plans are associated with the user in the storage unit.

14. The information processing device according to any one of claims 9 to 13, wherein the storage unit stores a plurality of workflow plans associated with a workflow creator.

15. An information processing method, executed by a processor of an information processing device comprising a network interface (44) connectable to a plurality of user terminals (3) via a network; a storage unit storing user settings for users of the user terminals, the method comprising:
storing a workflow plan created by an operation of a workflow creator at a creator terminal, the workflow plan being associated with a user of a user terminal and including accessing a cloud service using a first cloud service account, and
registering a second cloud service account for accessing the cloud service in response to an instruction from the user at the user terminal, the second cloud service account being associated with the user, wherein
when the workflow plan is executed via the network, the second cloud service account is used for accessing the cloud service instead of the first cloud service account.
